# EUROPÄISCHE PATENTSCHRIFT

(11) **EP 1 427 050 B1**
(45) Veröffentlichungstag und Bekanntmachung des Hinweises auf die Patenterteilung: **27.12.2006**
(21) Anmeldenummer: 03023398.5
(22) Anmeldetag: 17.10.2003
(51) Int. Cl.: H01M 2/04, H01M 2/12, H01M 10/06, H01M 10/12

(54) **Akkumulator, insbesondere Bleiakkumulator**
Accumulator, in particular lead accumulator
Accumulateur, en particulier accumulateur au plomb

(30) Priorität: 26.11.2002 DE 10254950
(43) Veröffentlichungstag der Anmeldung: 09.06.2004
(73) Patentinhaber: VB Autobatterie GmbH & Co. KGaA, 30419 Hannover (DE)
(72) Erfinder: Mühe, Hans, 31137 Hildesheim (DE); Schellenberg, Peter, 31515 Wunstorf (DE)
(74) Vertreter: Gerstein, Hans Joachim

(56) Entgegenhaltungen:
- EP-A- 0 503 264
- EP-A- 0 523 273
- EP-A- 0 570 703
- EP-A- 0 584 490
- EP-A- 0 584 528
- EP-A- 1 156 539
- US-A- 5 843 593

## Beschreibung

Die Erfindung betrifft einen Akkumulator, insbesondere einen Bleiakkumulator, mit einem mehrere Zellen aufweisenden Gehäuse und einem das Gehäuse abschließenden Deckel, wobei der Deckel ein auf das Gehäuse aufgesetztes Unterteil und ein im Abstand zum Unterteil angeordnetes und das Unterteil dicht abschließendes Oberteil hat, und wobei labyrinthartige Ablaufkanäle zur Säureabscheidung zwischen dem Unterteil und dem Oberteil ausgebildet sind.

In der EP 0 523 273 B1 ist ein Akkumulator mit einem Kunststoffgehäuse beschrieben, in dem mehrere Zellen angeordnet sind. Üblicherweise sind 6 Zellen vorhanden. Der Deckel besteht aus einem auf das Gehäuse flüssigkeits- und gasdicht aufgesetzten Unterteil mit jeweils einer Füll- und Kontrollöffnung pro Zelle, die mit einem Verschlussstopfen verschließbar ist. Im Abstand zu dem Unterteil ist ein Oberteil auf das Unterteil aufgesetzt, wobei zwischen dem Unterteil und dem Oberteil an mit Kanalwänden pro Zelle labyrinthartige Hohlräume zur Säureabscheidung ausgebildet sind. Gas und Flüssigkeit kann durch die Füll- und Kontrollöffnungen in dem Unterteil an den Verschlussstopfen vorbei in die Hohlräume fließen. Um die beim Betrieb des Bleiakkumulators entstehenden Gase abzuleiten, ist das durch die Hohlräume gebildete Entgasungssystem mit mindestens einer Entgasungsöffnung versehen, die einen Zündschutz in Form eines Flammsiebventils aufweist.

In der EP 0 570 703 B1 ist ein ähnlicher Akkumulator beschrieben, dessen Gehäuse ebenfalls durch das Unterteil vollständig abgeschlossen ist und bei dem im Abstand zum Unterteil ein Oberteil angeordnet und zwischen dem Unterteil und dem Oberteil ein Gassammelraum zur Säureabscheidung ausgebildet ist. Wiederum erstreckt sich der Verschlussstopfen bis in die Ebene des Unterteils herab. In der Ebene des Unterteils ist im Bereich des Verschlussstopfenseine Gasaustrittstelle vorhanden, deren Größe so bemessen ist, dass bei kurzzeitiger Kippung bis zu 180° nicht mehr Säure aus dem Gasraum der jeweiligen Zelle austreten kann, als von dem ihr zugeordneten Hohlraum aufgenommen wird.

In dem US-Patent 5,843,593 ist ein auslaufsicherer Batteriedeckel für eine Speicherbatterie beschrieben, der ein Labyrinth von Durchgängen zwischen jedem Zellventil und einem Atmosphärenventil hat. Die labyrinthförmigen Hohlräume sind so ausgelegt, dass immer ein Teil eines jeden Pfades des Labyrinths über dem Niveau gehalten wird, das der Elektrolyt in der zugehörigen Zelle erreicht, wenn die Batterie auf irgendeine ihrer Seiten gekippt ist oder um 90° aus ihrer aufrechten Position gedreht wird. Mit dieser Labyrinthanordnung wird verhindert, dass Elektrolyt das Atmosphärenventil erreicht und aus der Batterie austritt.

Die EP 1 156 539 A offenbart einen mehrzelligen Akkumulator mit einem Gehäuse sowie mit einem das Gehäuse gasdicht verschliessenden, aus Ober- und Unterdeckel bestehenden Gehäusedeckel, wobei zwischen Ober- und Unterdeckel unter Ausbildung einer Vielzahl von miteinander korrespondierenden Labyrinthkammern eine sämtliche Zellen strömungstechnisch miteinander verbindende Entgasungsleitung vorgesehen ist, die stimseitig in wenigstens einer Entgasungsöffnung mündet und mit einem Zündschutz verschlossen ist.

Die EP 0 584 528 A offenbart einen Bleiakkumulator mit einem mehrere Zellen aufnehmenden Gehäuse sowie mit einem das Gehäuse abschliessenden Deckel, in dem zwischen einem Unterdeckel und einem dazu im Abstand angeordneten Oberdeckel ein Hohlraum zur Säureabscheidung ausgebildet ist, wobei der Unterdeckel eine Bodenöffnung und der Oberdeckel eine mit einem Verschlussstopfen verschliessbare, zu der Bodenöffnung koaxiale Füll- und Kontrollöffnung mit einem nach unten in den Hohlraum gerichteten Rohrstutzenteil aufweist, dessen unteres Ende unter Belassung eines freien Ringspaltes oberhalb des Unterdeckels endet.
In der EP 0 584 490 A ist ein ähnlicher Bleiakkumulator wie in der EP 0 584 528 A beschrieben, wobei im Deckel zwischen einem Unterdeckel und einem dazu im Abstand angeordneten Oberdeckel für jede Zelle jeweils eine Kammer mit Umlenkstegen zur Säureabscheidung ausgebildet ist, wobei die Zellen im Deckel jeweils eine mit einem Verschlussstopfen verschliessbare sowie von einem eine Entgasungs- und Rücklauföffnung aufweisenden Ringsteg umgebene Füll- und ggf. Kontrollöffnung aufweisen und wobei den Zellen wenigstens ein Zündschutz im Deckel zugeordnet ist.

Die EP 0 503 264 A offenbart eine Bleiakkumulatoren-Batterie für Kraftfahrzeuge, mit einem im wesentlichen prismatischen Gehäuse, das sich aus einem alle Zellengefässe bildenden Blockkasten und einem die Zellengefässe abdeckenden Blockdeckel zusammensetzt, der mit seiner Unterseite am Blockkasten derart befestigt ist, dass die Zellengefässe untereinander und das Gehäuse nach aussen hin abgedichtet sind.

Aufgabe der Erfindung ist es, einen verbesserten Akkumulator zu schaffen, der einen in der Fertigung kostengünstigeren Batteriedeckel aufweist und bei dem ein Rückfluss von in dem Hohlraum angesammelten Elektrolyt in die Zelle verbessert und die Gefahr einer statischen Aufladung im Deckel verringert wird.

Die Aufgabe wird mit dem gattungsgemäßen Akkumulator erfindungsgemäß dadurch gelöst, dass das Unterteil im Bereich des Oberteils angrenzend an die Ablaufkanäle durchbrochen ist und die Zellen in den durchbrochenen Bereichen mit an das Unterteil anschließenden Zelltrennwandabschnitten flüssigkeitsdicht voneinander getrennt und durch das Oberteil abgeschlossen sind.

Es wird somit vorgeschlagen, das Gehäuse nicht wie herkömmlicherweise vollständig durch das Unterteil abzuschließen, sondern angrenzend an labyrinthförmige Ablaufkanäle in dem Unterteil durchbrochene Bereiche vorzusehen. In diesen durchbrochenen Bereichen werden die Zellen dann durch das Oberteil abgeschlossen und mittels Zelltrennwandabschnitten flüssigkeitsdicht voneinander abgetrennt. Die Hohlraumfläche wird somit erfindungsgemäß weitgehend reduziert. Dies hat den Vorteil, dass die Ablaufkanäle kürzer ausgestaltet sind und ein Rückfluss von Elektrolyt aus den Hohlräumen in die Zellen schneller erfolgt. Zudem wird die Gefahr von statischer Aufladung im Bereich des übereinander liegenden Ober- und Unterteils erheblich reduziert, da nunmehr ein Großteil der Zelle lediglich von einer Wand, nämlich dem Oberteil abgeschlossen ist.

Das Unterteil hat in den durchbrochenen Bereichen vorzugsweise eine Stützstruktur mit Rippen, die die Zelltrennwandabschnitte bilden und mit den Zelltrennwänden der Zellen des Gehäuses fluchten. Die Rippen werden integral mit den Zelltrennwänden und dem Oberteil beispielsweise, durch Verschweißen so verbunden, dass die Zellen nach Aufsetzen des Deckels flüssigkeitsdicht voneinander getrennt sind.

Durch die Rippen wird der Deckel vorteilhafterweise versteift und die Zellen werden beim Aufsetzen des Deckels auf das Gehäuse auf kostengünstiger Weise, beispielsweise durch Verschweißen, Verkleben, Verklemmen der Rippen mit den Zelltrennwänden abgeschlossen.

Auf das Unterteil sind vorzugsweise Kanalwände angrenzend an die durchbrochen Bereiche aufgesetzt, um die labyrinthartigen Ablaufkanäle zu bilden. Weiterhin sind vorzugsweise Verstärkungsstege in den Ablaufkanälen vorgesehen, mit denen der Deckel stabilisiert wird, wenn das Oberteil auf das Unterteil aufgesetzt ist.

In dem Unterteil sind weiterhin vorzugsweise zwischen den Rippen, sowie zwischen den Rippen und den Kanalwänden Stege vorgesehen, die zur weiteren Stabilisierung des Deckels dienen. Die Stege werden bei der Herstellung des Deckels vorzugsweise integral mit dem Oberteil bspw. durch Verschweißen oder Verkleben verbunden, so dass sich keine Elektrolyttropfen in Zwischenräumen halten können.

Die Verbindung des Oberteils mit den Rippen, den Kanalwänden, den Verstärkungsstegen und/oder den Stegen erfolgt vorzugsweise durch Verschweißen. Eine solche Herstellungsart ist sehr einfach, zuverlässig und kostengünstig.

Um eine Tropfenbildung von Elektrolyt in dem Deckel zu reduzieren ist die Oberfläche des Oberteils und/oder des Unterteils im Bereich der Ablaufkanäle vorzugsweise aufgerauht.

Weiterhin ist vorteilhaft, wenn die Ablaufkanäle jeweils zu einer in die zugeordnete Zelle mündende Ablauföffnung des Unterteils hin geneigt sind. Auf diese Weise wird sichergestellt, dass im Hohlraum befindliches Elektrolyt rasch wieder in die Zelle zurückfließt und die Hohlräume im Normalzustand beim Betrieb des Akkumulators elektrolytfrei sind.

Zum Ableiten von Gas aus dem Akkumulator sollte zudem in bekannter Weise eine Entgasungsöffnung kommunizierend mit den Ablaufkanälen verbunden sein, die mit einem Zündschutz versehen ist.

Die Erfindung wird nachfolgend anhand der beigefügten Zeichnungen näher erläutert. Es zeigen:
- Figur 1 -: Draufsicht auf einen erfindungsgemäßen Akkumulator mit teilweise freigeschnittenem Deckel und durchbrochenen Bereichen im Unterteil;
- Figur 2 -: Schnittansicht des Akkumulators aus der Figur 1 entlang der Linie A-A;
- Figur 3 -: perspektivische Ansicht eines Ausschnitts einer Stützstruktur des Unterteils mit Rippen und Stegen.

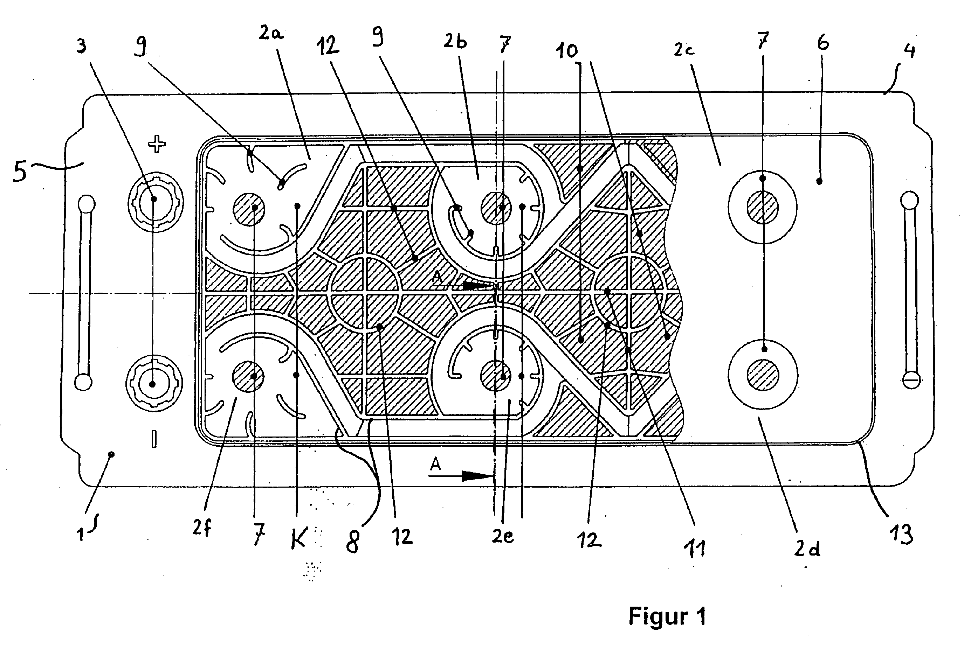

Die Figur 1 lässt einen Akkumulator 1 erkennen, der in bekannter Weise ein Gehäuse aus Kunststoff hat, in dem beispielsweise sechs Zellen 2a, 2b, 2c, 2d, 2e und 2f in zwei Reihen angeordnet sind. Die Zellen 2 sind in bekannter Weise mit Zellwänden voneinander abgeschlossen. Der Anschluss elektrischer Verbraucher an den Akkumulator 1 erfolgt über zwei Pole 3. Das oben offene Gehäuse wird durch einen Deckel 4 aus thermoplastischem Kunststoff verschlossen. Dieser Deckel 4 hat ein Unterteil 5 und ein mit Abstand zum Unterteil 5 angeordnetes Oberteil 6. Das Oberteil 6 in Form einer Deckelplatte erstreckt sich über einen weiten Bereich des Unterteils 5, mindestens jedoch über Füll- und Kontrollöffnungen 7, die in dem Unterteil 5 vorgesehen sind. Auf die Oberseite des Unterteils 5 sind Kanalwände 8 angeordnet, die labyrinthartige Kanäle bilden. Die labyrinthartigen Kanäle verlaufen jeweils von der Füll- und Kontrollöffnung 7 einer Zelle 2 zur Füll- und Kontrollöffnung 7 der benachbarten Zelle 2, so dass die Zellen 2 durch die Hohlräume bildenden Kanäle kommunizierend miteinander verbunden sind. Weiterhin sind Verstärkungsstege 9 in den Hohlräumen vorgesehen, um das Oberteil 6 abzustützen und den Deckel 4 zu stabilisieren.

Angrenzend an die äußeren Kanalwände 8 hat das Unterteil 5 durchbrochene Bereiche 10, so dass die Zellen 2 in den durchbrochenen Bereichen 10 lediglich durch das Oberteil 6 des Deckels 4 abgedeckt sind.

Zur Abtrennung der Zellen 2 sind Zelltrennwandabschnitte in Form von Rippen 1 1 an dem Unterteil 5 vorgesehen, die integral mit dem Oberteil 6 beispielsweise durch Verkleben oder Verschweißen verbunden sind und mit den Zellwänden der Zellen 2 fluchten. Die Rippen 11 werden beim Aufsetzen des Deckels 4 auf das Gehäuse des Akkumulators 1 flüssigkeitsdicht mit den Zellwänden beispielsweise durch Verkleben, Verschweißen oder Klemmen verbunden.

Die Rippen 11 bilden eine Stützstruktur für die Kanaltrennwände 8 des Entgasungssystems und für den Deckel 4, um für die nötige Stabilität zu sorgen. Die Rippen 11 werden zudem durch kreisförmige Stege 12 miteinander verbunden, so dass die Stützstruktur eine weitere Stabilität erhält. Weiterhin sind Stege 12 vorgesehen, die sich zwischen Rippen 11 beziehungsweise Stegen 12 und den Kanaltrennwänden 8 erstrecken.

Die das Entgasungssystem bildenden labyrinthförmigen Hohlräume beziehungsweise Kanäle sind zu den Füll- und Kontrollöffnungen 7 der jeweils zugeordneten Zelle 2 hin geneigt, so dass Elektrolyt relativ schnell wieder in die Zelle zurückfließen kann. Die Oberflächen des Unterteils 5 und des Oberteils 6 sind im Bereich der Kanäle vorzugsweise aufgerauht, so dass eine Bildung von Elektrolyttröpfchen weitgehend verhindert wird. Die Kanäle der Teilentgasungssysteme der Zellen 2 sind miteinander verbunden und enden in wenigstens einer nicht dargestellten Entgasungsöffnung, die vorzugsweise mit einer Flammenschutzfritte versehen ist.

Bei der Herstellung des Akkumulators wird der Deckel 4 an seiner Oberseite mit dem Oberteil 6 verschlossen, indem das Oberteil 6 in Form einer Deckelplatte entlang einer umlaufenden Kante 13 des Unterteils 5, der Rippen 11, der Stege 12 und der Verstärkungsstege 9 mit dem Unterteil 5 beispielsweise durch Verkleben oder Verschweißen integral verbunden wird. Der vormontierte Deckel 5 wird dann auf das Gehäuse des Akkumulators 1 aufgesetzt und mit diesem flüssigkeitsdicht fest verbunden. Hierbei werden die Rippen 11 mit den Zelltrennwänden flüssigkeitsdicht verbunden, so dass die Rippen 11 im Bereich des
Deckels 4 Zelltrennwandabschnitte der Zellen 2 bilden.

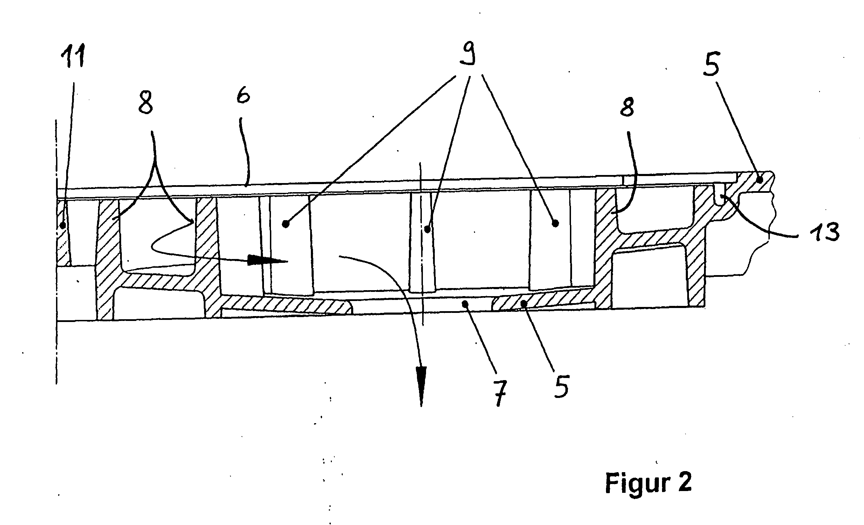

Die Figur 2 lässt den Deckel aus der Figur 1 im Schnitt entlang der Linie A-A erkennen. Es wird deutlich, dass in dem Unterteil 5 Kanaltrennwände 8 ausgebildet sind, um Elektrolyt und Gas aus Füll- und Kontrollöffnungen 7 in dem Unterteil 5 durch labyrinthartige Kanäle in dem Zwischenraum zwischen Unterteil 5 und Oberteil 6 zwischen zu speichern. Das Oberteil 6 ist hierbei flüssigkeitsdicht auf die Kanaltrennwände 8 des Oberteils 6 aufgesetzt und in eine umlaufende Kante 13 des Unterteils 5 eingeklemmt. Um eine ausreichende Stabilität des Deckels zu gewährleisten sind Verstärkungsstege 9 vorgesehen, die sich im Bereich der Kanäle vom Unterteil 5 zum Oberteil 6 erstrecken.

Es ist weiterhin eine Rippe 1 1 sichtbar, die sich fluchtend mit den nicht dargestellten Zelltrennwänden im Gehäuse des Akkumulators 1 erstrecken und integral flüssigkeitsdicht damit verbunden werden.

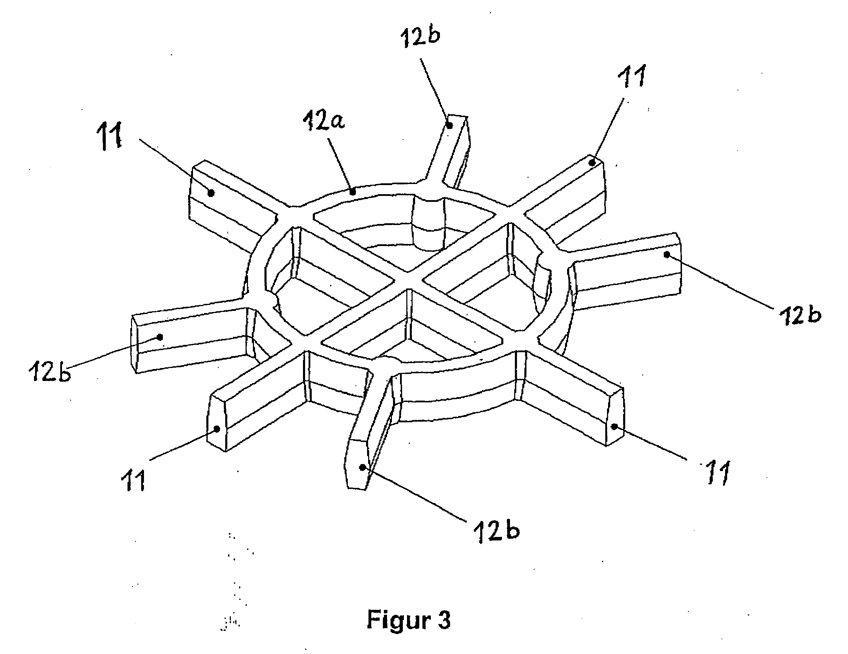

Die Figur 3 lässt eine perspektivische Ansicht einer Stützstruktur mit den kreuzförmigen Rippen 11 erkennen, die durch kreisförmige Stege 12a stabilisiert sind. Von den Stegen 12a gehen weitere Stege 12b in Richtung der Kanaltrennwände des Unterteils 5 ab. Die Rippen 11 sind so ausgerichtet, dass sie mit den Zelltrennwänden der Zellen 2 des Gehäuses fluchten und Zelltrennwandabschnitte im Bereich des Deckels 4 bilden. Die Stege ,12a, b dienen hingegen zur Stabilisierung des Deckels.

## Patentansprüche

1. Akkumulator (1), insbesondere Bleiakkumulator, mit einem mehrere Zellen (2) aufweisenden Gehäuse und einem das Gehäuse abschließenden Deckel (4), wobei der Deckel ein auf das Gehäuse aufgesetztes Unterteil (5) und ein im Abstand zum Unterteil (5) angeordnetes und das Unterteil (5) dicht abschließendes Oberteil (6) hat, und wobei labyrinthartige Ablaufkanäle (K) zur Säureabscheidung zwischen dem Unterteil (5) und dem Oberteil (6) ausgebildet sind, **dadurch gekennzeichnet, dass** das Unterteil (5) im Bereich des Oberteils (6) angrenzend an die Ablaufkanäle (K) durchbrochen ist und die Zellen (2) in den durchbrochenen Bereichen (10) mit an das Oberteil (6) anschließenden Zelltrennwandabschnitten flüssigkeitsdicht voneinander getrennt und durch das Oberteil (6) abgeschlossen sind.

2. Akkumulator (1) nach Anspruch 1, **dadurch gekennzeichnet, dass** das Unterteil (5) in den durchbrochenen Bereichen (10) eine Stützstruktur mit die Zelltrennwandabschnitte bildenden Rippen (11) hat, die mit den Zelltrennwänden fluchten und integral mit den Zelltrennwänden und dem Oberteil (6) verbunden sind.

3. Akkumulator (1) nach Anspruch 1 oder 2, **dadurch gekennzeichnet, dass** das Unterteil (5) Kanalwände (8) angrenzend an die durchbrochenen Bereiche (10) zur Bildung der labyrinthartigen Ablaufkanäle (K) hat.

4. Akkumulator (1) nach Anspruch 3, **dadurch gekennzeichnet, dass** das Unterteil (5) in den Ablaufkanälen (K) Verstärkungsstege (9) hat.

5. Akkumulator (1) nach einem der vorhergehenden Ansprüche, **dadurch gekennzeichnet, dass** die Zellen (2) miteinander kommunizierend durch die Ablaufkanäle (K) verbunden sind.

6. Akkumulator (1) nach einem der vorhergehenden Ansprüche, **dadurch gekennzeichnet, dass** das Unterteil (5) Stege (12) hat, die sich zwischen den Rippen (11) sowie zwischen den Rippen (11) und den Kanalwänden (8) erstrecken.

7. Akkumulator (1) nach Anspruch 6, **dadurch gekennzeichnet, dass** die Stege (12) mit dem Oberteil (6) integral verbunden sind.

8. Akkumulator (1) nach einem der Ansprüche 2 bis 7, **dadurch gekennzeichnet, dass** das Oberteil (6) mit den Rippen (11) und/oder den Kanalwänden (8) und/oder den Verstärkungsstegen (9) und/oder den Stegen (12) verschweißt ist.

9. Akkumulator (1) nach einem der vorhergehenden Ansprüche, **dadurch gekennzeichnet, dass** das Oberteil (6) und/oder das Unterteil (5) im Bereich der Ablaufkanäle (K) eine aufgerauhte Oberfläche haben.

10. Akkumulator (1) nach einem der vorhergehenden Ansprüche, **dadurch gekennzeichnet dass** die Ablaufkanäle (K) jeweils zu einer in die zugeordnete Zelle (2) mündende Ablauföffnung des Unterteils (5) hin geneigt sind.

11. Akkumulator (1) nach einem der vorhergehenden Ansprüche, **dadurch gekennzeichnet, dass** für jede Zelle (2) in dem Deckel (4) eine durch einen Verschlussstopfen verschließbare Füll- und Kontrollöffnung (7) vorgesehen sind.

12. Akkumulator (1) nach einem der vorhergehenden Ansprüche, **gekennzeichnet durch** mindestens eine mit einem Zündschutz versehende Entgasungsöffnung, die mit den Ablaufkanälen (K) kommunizierend verbunden ist.

## Claims

1. Rechargeable battery (1), in particular a lead-acid rechargeable battery, having a housing which has two or more cells (2) and having a cover (4) which closes the housing, with the cover having a lower part (5), which is fitted to the housing, and having an upper part (6), which is arranged at a distance from the lower part (5) and closes the lower part (5) forming a seal, and with labyrinth-like outlet channels (K) being formed between the lower part (5) and the upper part (6) for acid deposition, **characterized in that** the lower part (5) is cut through in the area of the upper part (6) adjacent to the outlet channels (K), and the cells (2) in the cut-through areas (10) are separated from one another in a liquid-tight manner by cell separating wall sections which are adjacent to the upper part (6), and are closed by the upper part (6) .

2. Rechargeable battery (1) according to Claim 1, **characterized in that**, in the cut-through areas (10), the lower part (5) has a supporting structure with ribs (11) which form the cell separating wall sections, are aligned with the cell separating walls and are integrally connected to the cell separating walls and to the upper part (6).

3. Rechargeable battery (1) according to Claim 1 or 2, **characterized in that** the lower part (5) has channel walls (8) adjacent to the cut-through areas (10) in order to form the labyrinth-like outlet channels (K).

4. Rechargeable battery (1) according to Claim 3, **characterized in that** the lower part (5) has reinforcing webs (9) in the outlet channels (K).

5. Rechargeable battery (1) according to one of the preceding claims, **characterized in that** the cells (2) are connected to one anther by means of the outlet channels (K) such that they communicate.

6. Rechargeable battery (1) according to one of the preceding claims, **characterized in that** the lower part (5) has webs (12) which extend between the ribs (11), as well between the ribs (11) and the channel walls (8).

7. Rechargeable battery according to Claim 6, **characterized in that** the webs (12) are integrally connected to the upper part (6).

8. Rechargeable battery (1) according to one of Claims 2 to 7, **characterized in that** the upper part (6) is welded to the ribs (11) and/or to the channel walls (8), and/or to the reinforcing webs (9) and/or to the webs (12).

9. Rechargeable battery (1) according to one of the preceding claims, **characterized in that** the upper part (6) and/or the lower part (5) have/has a roughened surface in the area of the outlet channels (K).

10. Rechargeable battery (1) according to one of the preceding claims, **characterized in that** the outlet channels (K) are each inclined towards an outlet opening in the lower part (5), which opens into the associated cell (2).

11. Rechargeable battery (1) according to one of the preceding claims, **characterized in that** a filling and monitoring opening (7), which can be closed by means of a sealing plug, is provided for each cell (2) in the cover (4).

12. Rechargeable battery (1) according to one of the preceding claims, **characterized by** at least one degassing opening, which is provided with ignition protection and is connected to the outlet channels (K) such that they communicate.

## Revendications

1. Accumulateur (1), en particulier accumulateur au plomb, doté d'un boîtier présentant plusieurs cellules (2) et d'un couvercle (4) enfermant le boîtier, le couvercle ayant une partie inférieure (5) placée sur le boîtier et une partie supérieure (6) écartée de la partie inférieure (5) et fermant hermétiquement cette dernière, et avec entre la partie inférieure (5) et la partie supérieure (6), des drains (K) de type labyrinthe servant à la précipitation des acides,
**caractérisé en ce que**
la partie inférieure (5) est interrompue dans la zone de la partie supérieure (6) adjacente aux drains (K), et les cellules (2) sont séparées hermétiquement les unes des autres dans les zones interrompues (10) par des segments de paroi de séparation des cellules placés contre la partie supérieure (6) et sont fermées par la partie supérieure (6).

2. Accumulateur (1) selon la revendication 1,
**caractérisé en ce que**
la partie inférieure (5) dans les zones interrompues (10) présente une structure d'appui avec des nervures (11) formant les segments de la paroi de séparation des cellules, en les affleurant et en étant intégralement reliées aux parois et à la partie supérieure (6).

3. Accumulateur (1) selon la revendication 1 ou 2,
**caractérisé en ce que**
la partie inférieure (5) a des parois de canaux (8) adjacentes aux zones interrompues (10) pour la formation de drains (K) de type labyrinthe.

4. Accumulateur (I) selon la revendication 3,
**caractérisé en ce que**
la partie inférieure (5) présente des barrettes de renforcement (9) dans les drains (K).

5. Accumulateur (1) selon l'une quelconque des revendications précédentes,
**caractérisé en ce que**
les cellules (2) sont reliées les unes aux autres en communiquant par les drains (K).

6. Accumulateur (1) selon l'une quelconque des revendications précédentes,
**caractérisé en ce que**
la partie inférieure (5) présente des barrettes (12) qui s'étendent entre les nervures (11) ainsi qu'entre les nervures (11) et les parois de canaux (8).

7. Accumulateur (1) selon la revendication 6,
**caractérisé en ce que**
les barrettes (12) sont reliées intégralement à la partie supérieure (6).

8. Accumulateur (1) selon l'une quelconque des revendications 2 à 7,
**caractérisé en ce que**
la partie supérieure (6) est soudée aux nervures (11) et/ou aux parois des canaux (8) et/ou aux barrettes de renforcement (9) et/ou aux barrettes (12).

9. Accumulateur (1) selon l'une quelconque des revendications précédentes,
**caractérisé en ce que**
la partie supérieure (6) et/ou la partie inférieure (5) ont une surface égratignée dans la zone des drains (K).

10. Accumulateur (1) selon l'une quelconque des revendications précédentes,
**caractérisé en ce que**
les drains (K) sont inclinés respectivement vers un orifice d'évacuation de la partie inférieure (5) débouchant dans la cellule associée (2).

11. Accumulateur (1) selon l'une quelconque des revendications précédentes,
**caractérisé en ce que**
des orifices de remplissage et de contrôle (7) refermables par un obturateur sont prévus pour chaque cellule (2) dans le couvercle (4).

12. Accumulateur (1) selon l'une quelconque des revendications précédentes,
**caractérisé par**
au moins un orifice de dégazage pourvu d'une protection anti-allumage et relié en communiquant avec les drains (K).
